# EUROPEAN PATENT SPECIFICATION

(11) **EP 3 901 598 B1**
(45) Date of publication and mention of the grant of the patent: **28.09.2022**
(21) Application number: 21164189.9
(22) Date of filing: 23.03.2021
(51) Int. Cl.: G01K 1/08, G01K 13/08, G12B 9/00

(54) **TEMPERATURE SENSOR FOR ROTATING ELECTRIC MACHINE AND METHOD OF MANUFACTURING THE SAME**
TEMPERATURSENSOR FÜR ROTIERENDE ELEKTRISCHE MASCHINE UND VERFAHREN ZUR HERSTELLUNG DAVON
CAPTEUR DE TEMPÉRATURE POUR MACHINE ÉLECTRIQUE ROTATIVE ET SON PROCÉDÉ DE FABRICATION

(30) Priority: 13.04.2020 JP 2020071396
(43) Date of publication of application: 27.10.2021
(73) Proprietor: Kabushiki Kaisha Toyota Jidoshokki, Kariya-shi, Aichi 448-8671 (JP)
(72) Inventor: ASANO, Tatsuya, Kariya-shi, Aichi 448-8671 (JP)
(74) Representative: TBK

(56) References cited:
- CN-U- 202 547 821
- DE-A1- 10 130 982
- US-A1- 2004 227 519

## Description

### BACKGROUND ART

The present disclosure relates to a temperature sensor for a rotating electric machine and a method of manufacturing the temperature sensor for the rotating electric machine.

Publication of Registered Utility Model Application No. 3028906 discloses a thermistor temperature sensor as a known technique related to a temperature sensor for a rotating electric machine and a method of manufacturing the temperature sensor for the rotating electric machine, for example. In the thermistor temperature sensor disclosed in the Publication, when assembling a thermistor element into a metal protective case, two lead wires of the thermistor element are inserted through insulating tubes, and connected to external cables by soldering, welding, or the like. To improve electrical insulation and mechanical strength between two connecting portions of the lead wires and the external cables and between the connecting portions and the metal protective case, the connecting portions and the circumference proximate to the connecting portions are protected by using a resin molded holder, and fixed by being filled with resin around the resin molded holder.

The Publication also discloses a glass-sealed thermistor element reinforced with reinforcement resin by directly coating the glass-sealed thermistor element with the reinforcement resin (see Conventional Technique and FIG. 7 in the Publication). In addition, the Publication discloses a thermistor element in which a sealing glass and a ceramic tube are integrated with each other and that is used when a condition of use requires high insulation property and mechanical strength at a high humidity (see Conventional Technique and FIG. 8 in the Publication). The thermistor element in which the sealing glass and the ceramic tube are integrated is manufactured by forming a ceramic tube that is a ceramic molded object, inserting a lead wire through the ceramic tube to melt the sealing glass in an electric furnace, and attaching the melted sealing glass to the ceramic tube.

However, since the thermistor temperature sensor disclosed in the Publication includes the resin molded holder, there is a problem where a dedicated resin molded holder is required and an assembling step in which the resin molded holder is assembled and installations for the assembling of the resin molded holder in a manufacturing process are further required. In the glass-sealed thermistor element that is directly coated with the reinforcement resin and the thermistor element in which the sealing glass and the ceramic tube are integrated as well, the reinforcement resin or the ceramic tube as a dedicated member is required and a coating step of the reinforcement resin and a manufacturing step of the ceramic tube are further required. On the other hand, in the temperature sensor for the rotating electric machine, while electrical insulation property and mechanical strength of a thermal sensing element are required, it is desired that a manufacturing cost is reduced by reducing dedicated members and steps such as the assembling of the dedicated members. In addition, when the thermal sensing element is, for example, a platinum thin film temperature sensor element that has ultra thin wires, each wire is easily damaged and snapped off from a root of the wire by external force that is applied to the wire.

DE 101 30 982 A1, CN 202 547 821 U, and US 2004/227519 A1 disclose temperature sensors comprising an insulating heat shrink tube.

The present disclosure has been made in view of the above circumstances and is directed to a temperature sensor for a rotating electric machine that achieves mechanical strength that is required for a thermal sensing sensor without using a dedicated member and a method of manufacturing the temperature sensor for the rotating electric machine.

### SUMMARY

In accordance with an aspect of the present disclosure, there is provided a temperature sensor for a rotating electric machine that includes a thermal sensing element that has a thermal sensing body and a conductive wire drawn from the thermal sensing body, an external cable that has a core wire and an insulating film with which the core wire is coated, a connecting portion that electrically connects the conductive wire and the core wire, and an insulating tube in which the conductive wire, the connecting portion, and a part of the external cable are inserted. The insulating tube is formed from a resin material, by which the insulating tube is shrunken in a radial direction of the insulating tube and elongated in an axial direction of the insulating tube when heated. The insulating tube has an external cable side end portion that is fixed to the insulating film by thermal shrinkage in the radial direction. The insulating tube has a thermal sensing body side end portion that presses the thermal sensing body by thermal elongation in the axial direction.

In accordance with an aspect of the present disclosure, there is provided a method of manufacturing a temperature sensor for a rotating electric machine that includes a thermal sensing element that has a thermal sensing body and a conductive wire drawn from the thermal sensing body, an external cable that has a core wire and an insulating film with which the core wire is coated, a connecting portion that electrically connects the conductive wire and the core wire, and an insulating tube in which the conductive wire, the connecting portion, and a part of the external cable are inserted, wherein the insulating tube is formed from a resin material, by which the insulating tube is shrunken in a radial direction of the insulating tube and elongated in an axial direction of the insulating tube when heated. The method of manufacturing the temperature sensor for the rotating electric machine includes wrapping an external cable side end portion of the insulating tube around the insulating film and bringing a thermal sensing body side end portion of the insulating tube into contact with a root of the conductive wire, heating the insulating tube, fixing the external cable side end portion to the insulating film by thermal shrinkage in the radial direction, and pressing the thermal sensing body by the thermal sensing body side end by thermal elongation in the axial direction.

Other aspects and advantages of the disclosure will become apparent from the following description, taken in conjunction with the accompanying drawings, illustrating by way of example the principles of the disclosure.

### BRIEF DESCRIPTION OF THE DRAWINGS

The disclosure, together with objects and advantages thereof, may best be understood by reference to the following description of the embodiments together with the accompanying drawings in which:
FIG. 1 is a cross-sectional view of a temperature sensor for an electric motor according to an embodiment of the present disclosure;
FIG. 2 is a view for an explanation of manufacturing process of the temperature sensor for the electric motor according to the embodiment of the present disclosure;
FIG. 3A is a view for an explanation illustrating the temperature sensor for the electric motor to be assembled;
FIG. 3B is a view for an explanation illustrating a state in which wires and core wires of the temperature sensor for the electric motor are connected;
FIG. 3C is a view for an explanation illustrating an assembled structure of the temperature sensor for the electric motor;
FIG. 4A is a view for an explanation illustrating the assembled structure after a first heating step;
FIG. 4B is a view for an explanation illustrating the assembled structure just to be inserted into a protective tube; and
FIG. 4C is a view for an explanation illustrating the assembled structure before a second heating step.

### DETAILED DESCRIPTION OF THE EMBODIMENTS

The following will describe a temperature sensor for a rotating electric machine according to an embodiment of the present disclosure with reference to the accompanying drawings. The present embodiment is an example in which the present disclosure is embodied in a temperature sensor for an electric motor that is mounted on a forklift as an industrial vehicle.

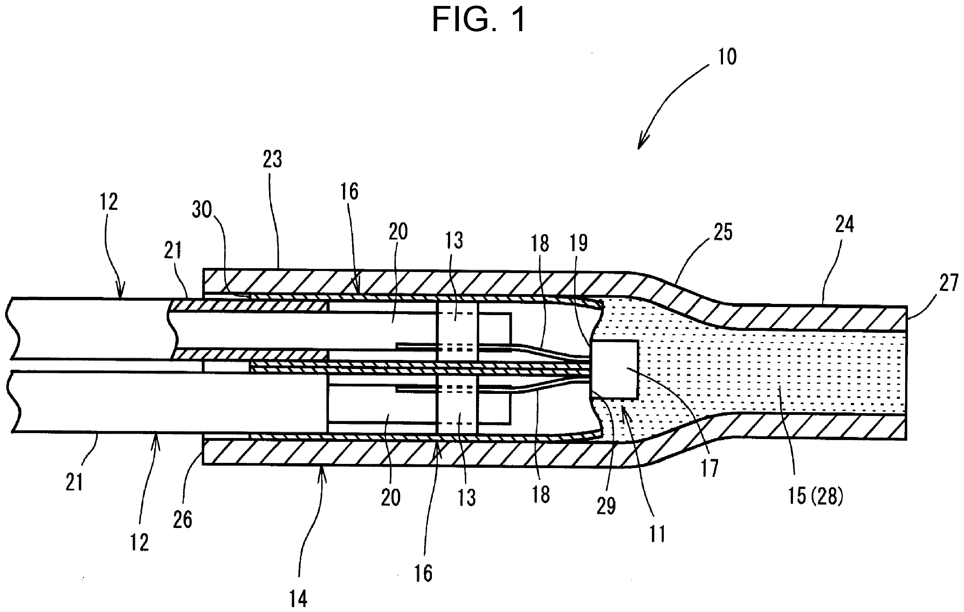

As illustrated in FIG. 1, a temperature sensor for an electric motor (hereinafter, simply called a temperature sensor) 10 corresponding to the temperature sensor for the rotating electric machine in the present disclosure includes a thermal sensing element 11, external cables 12, coupling members 13, a protective tube 14, a silicone filled portion 15, and insulating tubes 16.

The thermal sensing element 11 includes a resistance film pattern (not illustrated) for a temperature measurement. Specifically, one example of the thermal sensing element 11 is a platinum thin film temperature sensor element. The thermal sensing element 11 has a thermal sensing body 17 and a pair of conductive wires 18 that is drawn from the thermal sensing body 17. The thermal sensing body 17 has therein the resistance film pattern for the temperature measurement. The thermal sensing body 17 is formed in a cuboid shape whose one face of six faces is a wire drawn surface 19 from which the conductive wires 18 are drawn. The conductive wires 18 are made of conductive metal.

The external cables 12 each have a core wire 20 that is made of copper being a conductive material, and an insulating film 21 with which an outer circumference of the core wire 20 is coated. The core wire 20 has a circular cross-sectional shape. The insulating film 21 is formed from an insulation material (e.g. polyvinyl chloride mixture). In the present embodiment, the insulating film 21 that is located at an end of the external cable 12 is removed to uncover and expose a part of the core wire 20 to the outside.

Each of the coupling members 13 electrically connects the conductive wire 18 of the thermal sensing element 11 and an end of the uncovered core wire 20 of the external cable 12. The coupling member 13 is formed from a copper material being a conductive material. The coupling member 13 includes a pair of insertion portions (not illustrated) with insertion directions of the insertion portions parallel with each other. The conductive wire 18 is inserted in one of the insertion portions, and the core wire 20 is inserted in the other of the insertion portions in a direction opposite to an insertion direction of the conductive wire 18. The pair of insertion portions is crimped with the conductive wire 18 and the core wire 20 inserted in the insertion portions, and the conductive wire 18 and the core wire 20 are fixed to the coupling member 13. The coupling member 13 to which the conductive wire 18 and the core wire 20 are fixed corresponds to a connecting portion in the present disclosure.

The protective tube 14 accommodates the thermal sensing element 11, the external cables 12, the coupling members 13, and the insulating tubes 16. The protective tube is formed from a rubber material that has elasticity and heat resistance and is elastically deformable. The protective tube 14 has a large diameter portion 23, a small diameter portion 24 that has smaller inner and outer diameters than those of the large diameter portion 23, a middle portion 25 that connects the large diameter portion 23 and the small diameter portion 24. The thermal sensing element 11, the external cables 12, the coupling members 13, and the insulating tubes 16 are assembled with each other, and inserted into the protective tube 14 from an end 26 of the large diameter portion 23 that is open. The pair of external cables 12 is drawn from the end 26 of the large diameter portion 23.

An end 27 of the small diameter portion 24 is open, and all over the space in the protective tube 14 is filled with a silicone rubber 28 as a filler material. The silicone rubber 28 constitutes the silicone filled portion 15 that protects the thermal sensing element 11. Accordingly, a space around the thermal sensing element 11 in the protective tube 14 is filled with the silicone rubber 28, which protects the thermal sensing element 11. Incidentally, although the silicone rubber 28 is illustrated in only a space from the small diameter portion 24 to the middle portion 25 in FIG. 1, a space between the large diameter portion 23 and an assembled structure 31 that is described later is also filled with the silicone rubber 28, which is not illustrated.

The following will describe each of the insulating tubes 16. The conductive wire 18, the coupling member 13, and a part of the external cable 12 are inserted in the insulating tube 16. The insulating tube 16 is wrapped around the conductive wire 18 of the thermal sensing element 11, the core wire 20, the coupling member 13, and a part of the insulating film 21. The insulating tube 16 of the present embodiment is made of an FEP (tetrafluoroethylene-hexafluoropropylene copolymer) being a kind of fluororesin copolymers. The insulating tube 16 has transparency. An outer diameter and an inner diameter of the insulating tube 16 are constant. The insulating tube 16 is shrunken in a radial direction of the insulating tube 16 and elongated in an axial direction of the insulating tube 16 when heated. In the present embodiment, a length of the insulating tube 16 heated at about 120°C in the axial direction is about 10% longer than that of the insulating tube 16 to be heated. In addition, a diameter of the heated insulating tube 16 is as small as about 70% of a diameter of the insulating tube 16 to be heated.

A thermal sensing body side end portion 29 is an end of each of the insulating tubes 16 closer to the thermal sensing body 17 in the temperature sensor 10. The thermal sensing body side end portions 29 are in contact with the wire drawn surface 19 of the thermal sensing body 17, and press the wire drawn surface 19. An external cable side end portion 30 is an end of each of the insulating tubes 16 closer to the external cable 12, and wrapped around a part of the insulating film 21. The thermal sensing body side end portions 29 of the insulating tubes 16 press and hold the wire drawn surface 19, thereby protecting roots of the conductive wires 18. This reduces concentration of external force that facilitate the damaging and snapping of the conductive wires 18 in the roots of the conductive wires 18.

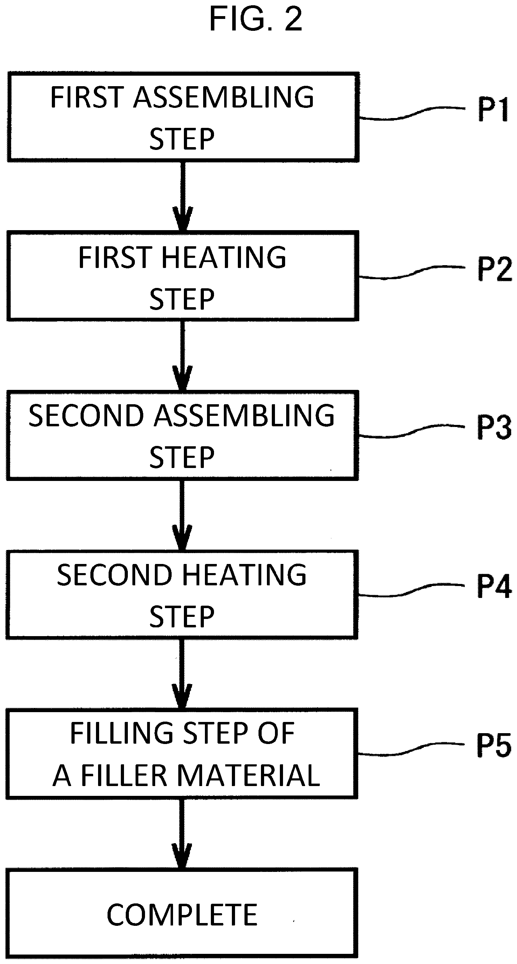

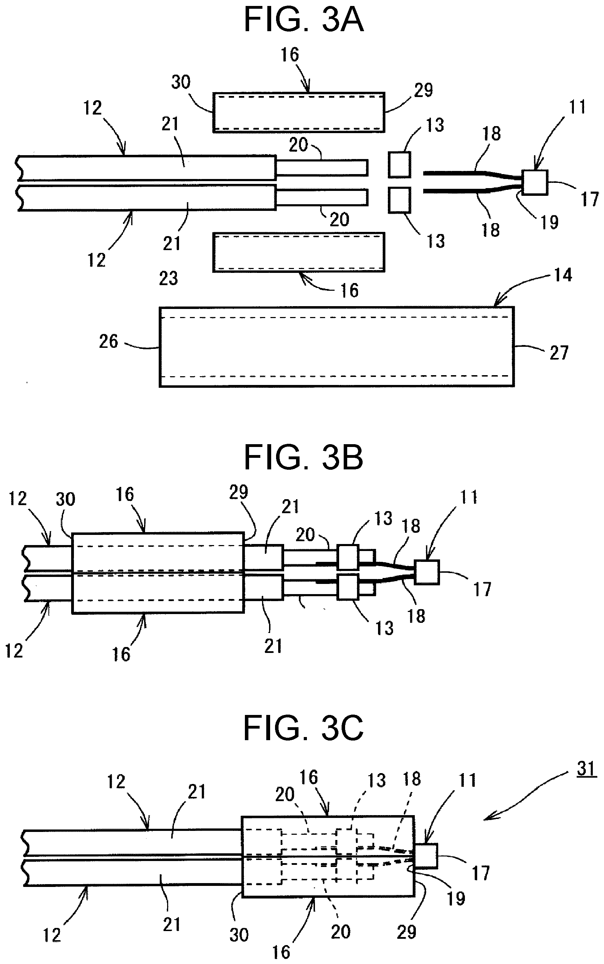

The following will describe a method of manufacturing the temperature sensor 10. As illustrated in FIG. 2, a manufacturing process of the temperature sensor 10 includes a first assembling step P1, a first heating step P2, a second assembling step P3, a second heating step P4, and a filling step of a filler material P5. The first assembling step P1 is a step in which the thermal sensing element 11, the external cables 12, the coupling members 13, and the insulating tubes 16 are assembled with each other to form the assembled structure 31 (see FIG. 3C). The first heating step P2 is a step in which the assembled structure 31 assembled in the first assembling step P1 is heated at about 120°C. The second assembling step P3 is a step in which the heated assembled structure 31 is inserted into the protective tube 14. The second heating step P4 is a step in which the protective tube 14 and the assembled structure 31 are heated. The filling step of the filler material P5 is a step in which the space around the thermal sensing element 11 in the protective tube 14 is filled with the silicone rubber 28 as the filler material, thereby forming the silicone filled portion 15.

In the first assembling step P1, the thermal sensing element 11, the external cables 12, the coupling members 13, and the insulating tubes 16 illustrated in FIG. 3A are assembled with each other, so that the assembled structure 31 illustrated in FIG. 3C is obtained. Specifically, firstly, each of the external cables 12 is inserted into one insulating tube 16 of the pair of insulating tubes 16. As illustrated in FIG. 3B, the insulating tubes 16 are temporarily moved so as to be located far away from ends of the insulating films 21 closer to the coupling members 13 after the external cables 12 are inserted into the insulating tubes 16. Next, an uncovered portion of each of the core wires 20 which is not coated with the insulating film 21 is inserted into the other of the insertion portions of each of the coupling members 13, and the conductive wire 18 of the thermal sensing element 11 is inserted into one of the insertion portions of the coupling member 13. After that, the coupling members 13 are crimped to fix the conductive wires 18 and the core wires 20 to the coupling members 13. Thus, the coupling members 13 electrically connect the pair of conductive wires 18 and the core wires 20 of the pair of external cables 12.

As illustrated in FIG. 3C, after the coupling members 13 are crimped, each of the insulating tubes 16 is moved so as to be wrapped around the coupling member 13, the conductive wire 18, the uncovered portion of the core wire 20 which is not coated with the insulating film 21, and the part of the insulating film 21 of the external cable 12. In this time, the insulating tube 16 is disposed with the thermal sensing body side end portion 29 of the insulating tube 16 brought into contact with the wire drawn surface 19.

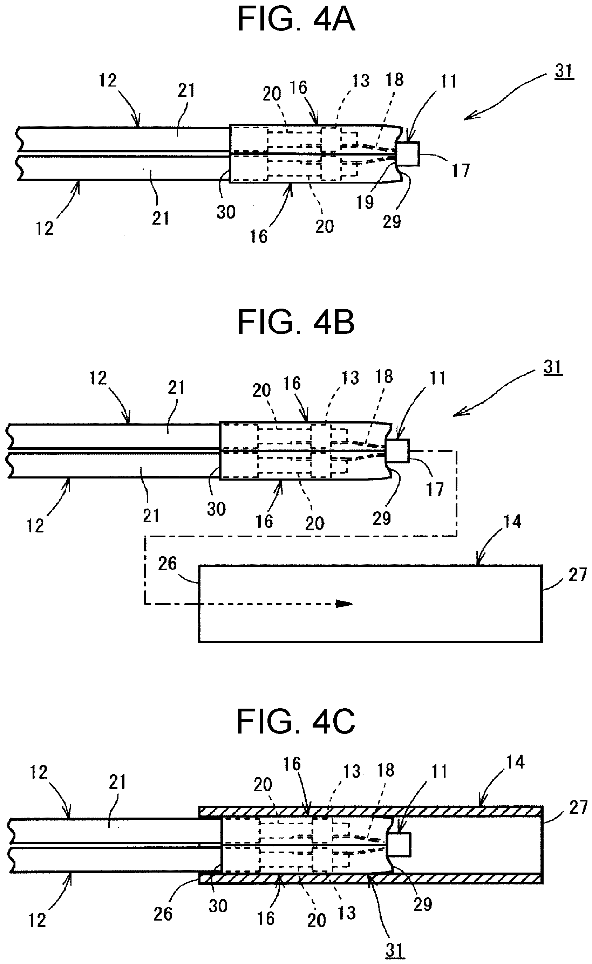

In the next first heating step P2, the assembled structure 31 is heated at about 120°C for 10 minutes. A general-purpose heating furnace (not illustrated) is used as the heating means. When the assembled structure 31 is heated, the insulating tubes 16 are shrunken in the radial direction of the insulating tubes 16 and elongated in the axial direction of the insulating tubes 16. Thus, as illustrated in FIG. 4A, the external cable side end portions 30 are tightly wrapped around the insulating films 21 of the external cables 12 by shrinkage of the insulating tubes 16 in the radial direction thereof, so that the insulating tubes 16 are fixed to the insulating films 21. The insulating tubes 16 are tightly wrapped around the coupling members 13 by the shrinkage of the insulating tubes 16 in the radial direction thereof. In addition, the insulating tubes 16 are elongated in the axial direction thereof by the heating of the assembled structure 31, so that the thermal sensing body side end portions 29 press the wire drawn surface 19.

The thermal sensing body side end portions 29 further press the wire drawn surface 19 by the elongation of the insulating tubes 16 in the axial direction thereof. Thus, as illustrated in FIG. 4, the thermal sensing body side end portions 29 that press and hold the wire drawn surface 19 each have a portion that protrudes from the wire drawn surface 19 in the radial direction of the insulating tubes 16. The portion of the thermal sensing body side end portion 29 protrudes toward the thermal sensing body 17 from the wire drawn surface 19 in the axial direction of the insulating tubes 16 by the elongation of the insulating tubes 16 in the axial direction thereof. The wire drawn surface 19 is pressed by the thermal sensing body side end portion 29 of each of the insulating tubes 16, and the thermal sensing body side end portion 29 partially protrudes toward the thermal sensing body 17 from the wire drawn surface 19 in the axial direction by the elongation of the insulating tube 16 in the axial direction, by which the external force is difficult to apply to the roots of the conductive wires 18. That is, the insulating tubes 16 reinforce the roots of the conductive wires 18.

Next, the assembled structure 31 is cooled in this state. In the next second assembling step P3, as illustrated in FIG. 4B, the cooled assembled structure 31 is inserted into the protective tube 14. The protective tube 14 before heated is illustrated in FIG. 4B, and has constant outer and inner diameters. As illustrated in FIG. 4C, the assembled structure 31 is inserted into the protective tube 14 so that the thermal sensing body 17 of the thermal sensing element 11 is located near a middle portion of the protective tube 14. In the assembled structure 31 inserted in the protective tube 14, the external cables 12 are drawn from the end 26 of the large diameter portion 23.

In the next second heating step P4, the assembled structure 31 is heated at 120°C for 10 minutes together with the protective tube 14. The protective tube 14 and the assembled structure 31 are cooled, by which the protective tube 14 is tightly wrapped around the assembled structure 31. The protective tube 14 has the large diameter portion 23, the small diameter portion 24, and the middle portion 25 after the second heating step P4. In the next filling step of the filler material P5, all over the space in the protective tube 14 is filled with the silicone rubber 28. The silicone rubber 28 is poured into the space in the protective tube 14 from the end 27 of the small diameter portion 24, and the poured silicone rubber 28 partially overflows from the protective tube 14 through the end 26 of the large diameter portion 23, by which it is checked that all over the space in the protective tube 14 have been filled with the silicone rubber 28. The silicone filled portion 15 is formed by filling the space from the large diameter portion 23 to the small diameter portion 24 with the silicone rubber 28. The space around the thermal sensing element 11 is filled with the silicone filled portion 15, thereby protecting the thermal sensing element 11 against an impact, moisture, etc. as well as ensuring electrical insulation of the thermal sensing element 11. The silicone filled portion 15 that seals the protective tube 14 is formed by the filling of the silicone rubber 28, so that the temperature sensor 10 is completed (see FIG. 1). The temperature sensor 10 is embedded in a stator coil (not illustrated) in the electric motor that is mounted on a forklift. Insulating varnish is dropped on the embedded temperature sensor 10 and solidifies, so that the temperature sensor 10 is firmly held in the stator coil.

The temperature sensor 10 and the method of manufacturing the temperature sensor 10 according to the present embodiment have the following advantageous effects.
(1) The insulating tubes 16 are formed from a resin material, by which the insulating tubes 16 are shrunken in the radial direction of the insulating tubes 16 and elongated in the axial direction of the insulating tubes 16 when heated. With this configuration, when the insulating tubes 16 are heated, the external cable side end portion 30 of each of the insulating tubes 16 is fixed to the insulating film 21 by thermal shrinkage in the radial direction, and the thermal sensing body side end portion 29 of the insulating tube 16 presses and holds the thermal sensing body 17 by thermal elongation in the axial direction. The thermal sensing body side end portion 29 of the insulating tube 16 presses and holds the thermal sensing body 17 by thermal elongation, so that the insulating tube 16 prevents the external force that is applied to the conductive wire 18, and the conductive wire 18 is difficult to be wobbly. As a result, the conductive wires 18 of the thermal sensing element 11 are difficult to snap from the roots of the conductive wires 18, and the mechanical strength that is required for the thermal sensing element 11 may be achieved. In addition, when using general-purpose products as the insulating tubes 16 that are shrunken in the radial direction and elongated in the axial direction when heated, a manufacturing cost of the temperature sensor 10 may be reduced since a dedicated member and dedicated installations are not required in the manufacturing of the temperature sensor 10.
(2) The thermal sensing body side end portion 29 of each of the insulating tubes 16 partially protrudes toward the thermal sensing body 17 from the root of the conductive wire 18 in the axial direction of the insulating tube 16. A protruding portion of the thermal sensing body side end portion 29 of the insulating tube 16 protruding toward the thermal sensing body 17 from the root of the conductive wire 18 further prevents the external force that is applied to the conductive wire 18, so that the conductive wire 18 is difficult to be wobbly. As a result, the conductive wires 18 are further difficult to snap from the roots of the conductive wires 18.
(3) In the manufacturing process of the temperature sensor 10, the external cable side end portion 30 of each of the insulating tubes 16 is wrapped around the insulating film 21 and the thermal sensing body side end portion 29 of the insulating tube 16 is brought into contact with the root of the conductive wire 18. Then, the insulating tubes 16 are heated. Thus, the external cable side end portion 30 of each of the insulating tubes 16 is fixed to the insulating film 21 by the thermal shrinkage in the radial direction, and the thermal sensing body side end portion 29 of the insulating tube 16 press the thermal sensing body 17 by the thermal elongation in the axial direction. After the insulating tubes 16 are heated in the manufacturing process, the thermal sensing body side end portions 29 of the insulating tubes 16 press and hold the thermal sensing body 17, so that the conductive wires 18 of the thermal sensing element 11 are difficult to snap from the roots of the conductive wires 18, and the mechanical strength that is required for the thermal sensing element 11 may be achieved.
(4) The insulating tubes 16 each have transparency, so that a worker can be visually check connection states between the coupling members 13 and the conductive wires 18 and between the coupling members 13 and the core wires 20 in the manufacturing process of the temperature sensor 10. In addition, even if a defect such as the damaging and snapping of the conductive wires 18 occurs, the worker can be visually check the defect.
(5) Even when the thermal sensing element 11 is a platinum thin film temperature sensor element that is smaller than other thermal sensing elements and thermistors and has ultra thin wires, the conductive wires 18 are difficult to damage and snap from the roots of the conductive wires 18 by a simple configuration using the insulating tubes 16.

The following modification may be allowed.

In the above embodiment, an FEP (tetrafluoroethylenehexafluoropropylene copolymer) being a kind of fluororesin copolymers is used as a material of the insulating tubes. However, the material of the insulating tubes is not limited to the FEP. The insulating tubes only need be tubes that have electrical insulation and are shrunken in a radial direction of the tubes and elongated in an axial direction of the tubes when heated.

In the above embodiment, the thermal sensing element has two wires. However, the number of the wires is not limited to two. The number of the wires is not limited in particular, for example, the number of the wires may be three, and the insulating tubes corresponding to the number of the wires only need be prepared.

In the above embodiment, the thermal sensing body side end portion of each of the insulating tubes partially protrudes toward the thermal sensing body from the root of the wire in an axial direction of the insulating tube. However, the present disclosure is not limited to this configuration. The thermal sensing body side end portion of each of the insulating tubes does not protrude toward the thermal sensing body, and may only press the thermal sensing body by thermal elongation.

In the above embodiment, the example is described, in which the present disclosure is embodied in the temperature sensor for the electric motor that is mounted on a forklift as an industrial vehicle. However, the present disclosure is not limited to this embodiment. The present disclosure may be embodied in a temperature sensor for a rotating electric machine that is a rotating electric machine of an industrial vehicle other than the forklift or another rotating electric machine.

## Claims

1. A temperature sensor for a rotating electric machine (10), comprising:
a thermal sensing element (11) that has a thermal sensing body (17) and a conductive wire (18) drawn from the thermal sensing body (17);
an external cable (12) that has a core wire (20) and an insulating film (21) with which the core wire (20) is coated;
a connecting portion (13) that electrically connects the conductive wire (18) and the core wire (20); and
an insulating tube (16) in which the conductive wire (18), the connecting portion (13), and a part of the external cable (12) are inserted, wherein
the insulating tube (16) is formed from a resin material, by which the insulating tube (16) is shrunken in a radial direction of the insulating tube (16) and elongated in an axial direction of the insulating tube (16) when heated,
the insulating tube (16) has an external cable side end portion (30) that is fixed to the insulating film (21) by thermal shrinkage in the radial direction, and
the insulating tube (16) has a thermal sensing body side end portion (29) that presses the thermal sensing body (17) by thermal elongation in the axial direction.

2. The temperature sensor for the rotating electric machine (10) according to claim 1, **characterized in that**
the thermal sensing body side end portion (29) partially protrudes toward the thermal sensing body (17) from a root of the conductive wire (18) in the axial direction.

3. A method of manufacturing a temperature sensor for a rotating electric machine (10) that includes:
a thermal sensing element (11) that has a thermal sensing body (17) and a conductive wire (18) drawn from the thermal sensing body (17);
an external cable (12) that has a core wire (20) and an insulating film (21) with which the core wire (20) is coated;
a connecting portion (13) that electrically connects the conductive wire (18) and the core wire (20); and
an insulating tube (16) in which the conductive wire (18), the connecting portion (13), and a part of the external cable (12) are inserted, the insulating tube being formed from a resin material, by which the insulating tube (16) is shrunken in a radial direction of the insulating tube (16) and elongated in an axial direction of the insulating tube (16) when heated,
the method of manufacturing the temperature sensor for the rotating electric machine (10), comprising:
wrapping an external cable side end portion (30) of the insulating tube (16) around the insulating film (21) and bringing a thermal sensing body side end portion (29) of the insulating tube (16) into contact with a root of the conductive wire (18);
heating the insulating tube (16);
fixing the external cable side end portion (30) to the insulating film (21) by thermal shrinkage in the radial direction; and
pressing the thermal sensing body (17) by the thermal sensing body side end (29) by thermal elongation in the axial direction.

## Patentansprüche

1. Temperatursensor für eine rotierende elektrische Maschine (10), der Folgendes aufweist:
ein Wärmeerfassungselement (11), das einen Wärmeerfassungskörper (17) und einen von dem Wärmeerfassungskörper (17) aus gezogenen leitenden Draht (18) aufweist;
ein Außenkabel (12), das einen Kerndraht (20) und eine Isolierschicht (21) aufweist, mit der der Kerndraht (20) beschichtet ist;
einen Verbindungsabschnitt (13), der den leitenden Draht (18) und den Kerndraht (20) elektrisch verbindet; und
einen Isolierschlauch (16), in den der leitende Draht (18), der Verbindungsabschnitt (13) und ein Teil des Außenkabels (12) eingesetzt sind, **dadurch gekennzeichnet, dass**
der Isolierschlauch (16) aus einem Harzmaterial gebildet ist, durch das der Isolierschlauch (16) in einer radialen Richtung des Isolierschlauchs (16) geschrumpft und in einer axialen Richtung des Isolierschlauchs (16) gestreckt wird, wenn er erhitzt wird,
der Isolierschlauch (16) einen außenkabelseitigen Endabschnitt (30) aufweist, der mittels Thermoschrumpfung in radialer Richtung an der Isolierschicht (21) fixiert ist, und
der Isolierschlauch (16) einen wärmeerfassungskörperseitigen Endabschnitt (29) aufweist, der den Wärmeerfassungskörper (17) mittels thermischer Streckung in der axialen Richtung drückt.

2. Temperatursensor für die rotierende elektrische Maschine (10) nach Anspruch 1, **dadurch gekennzeichnet, dass**
der wärmeerfassungskörperseitige Endabschnitt (29) von einem Fußpunkt des leitenden Drahts (18) in axialer Richtung teilweise in Richtung des Wärmeerfassungskörpers (17) vorsteht.

3. Verfahren zur Herstellung eines Temperatursensors für eine rotierende elektrische Maschine (10), das Folgendes beinhaltet:
ein Wärmeerfassungselement (11), das einen Wärmeerfassungskörper (17) und einen von dem Wärmeerfassungskörper (17) aus gezogenen leitenden Draht (18) aufweist;
ein Außenkabel (12), das einen Kerndraht (20) und eine Isolierschicht (21) aufweist, mit der der Kerndraht (20) beschichtet ist;
einen Verbindungsabschnitt (13), der den leitenden Draht (18) und den Kerndraht (20) elektrisch verbindet; und
einen Isolierschlauch (16), in den der leitende Draht (18), der Verbindungsabschnitt (13) und ein Teil des Außenkabels (12) eingesetzt sind, wobei der Isolierschlauch aus einem Harzmaterial gebildet ist, durch das der Isolierschlauch (16) in einer radialen Richtung des Isolierschlauchs (16) geschrumpft und in einer axialen Richtung des Isolierschlauchs (16) gestreckt wird, wenn er erhitzt wird,
das Verfahren zur Herstellung des Temperatursensors für die rotierende elektrische Maschine (10), das aufweist
Wickeln eines außenkabelseitigen Endabschnitts (30) des Isolierschlauchs (16) um die Isolierschicht (21) und In-Kontakt-Bringen eines wärmeerfassungskörperseitigen Endabschnitts (29) des Isolierschlauchs (16) mit einem Fußpunkt des leitenden Drahtes (18);
Erhitzen des Isolierschlauchs (16);
Fixieren des außenkabelseitigen Endabschnitts (30) an der Isolierschicht (21) mittels Wärmeschrumpfung in radialer Richtung; und
Pressen des Wärmeerfassungskörpers (17) mit dem wärmeerfassungskörperseitigen Ende (29) mittels Wärme-Strecken in der axialen Richtung.

## Revendications

1. Capteur de température pour une machine électrique rotative (10) comprenant :
un élément de détection thermique (11) qui a un corps de détection thermique (17) et un fil conducteur (18) provenant du corps de détection thermique (17) ;
un câble externe (12) qui a un fil central (20) et un film isolant (21) avec lequel le fil central (20) est recouvert ;
une partie de raccordement (13) qui raccorde électriquement le fil conducteur (18) et le fil central (20) ; et
un tube isolant (16) dans lequel le fil conducteur (18), la partie de raccordement (13) et une partie du câble externe (12) sont insérés, dans lequel :
le tube isolant (16) est formé à partir d'un matériau en résine, grâce auquel le tube isolant (16) est rétracté dans une direction radiale du tube isolant (16) et allongé dans une direction axiale du tube isolant (16) lorsqu'il est chauffé,
le tube isolant (16) a une partie d'extrémité du côté du câble externe (30) qui est fixée sur le film isolant (21) par rétraction thermique dans la direction radiale, et
le tube isolant (16) a une partie d'extrémité du côté du corps de détection thermique (29) qui comprime le corps de détection thermique (17) par allongement thermique dans la direction axiale.

2. Capteur de température pour une machine électrique rotative (10) selon la revendication 1, **caractérisé en ce que** :
la partie d'extrémité du côté du corps de détection thermique (29) fait partiellement saillie vers le corps de détection thermique (17) à partir d'une origine du fil conducteur (18) dans la direction axiale.

3. Procédé pour fabriquer un capteur de température pour une machine électrique rotative (10) qui comprend :
un élément de détection thermique (11) qui a un corps de détection thermique (17) et un fil conducteur (18) provenant du corps de détection thermique (17) ;
un câble externe (12) qui a un fil central (20) et un film isolant (21) avec lequel le fil central (20) est recouvert ;
une partie de raccordement (13) qui raccorde électriquement le fil conducteur (18) et le fil central (20) ; et
un tube isolant (16) dans lequel le fil conducteur (18), la partie de raccordement (13) et une partie du câble externe (12) sont insérés, le tube isolant étant formé à partir d'un matériau en résine, grâce auquel le tube isolant (16) est rétracté dans une direction radiale du tube isolant (16) et allongé dans une direction axiale du tube isolant (16) lorsqu'il est chauffé,
le procédé de fabrication du capteur de température pour une machine électrique rotative (10) comprenant les étapes consistant à :
enrouler une partie d'extrémité du côté du câble externe (30) du tube isolant (16) autour du fil isolant (21) et amener une partie d'extrémité du côté du corps de détection thermique (29) du tube isolant (16) en contact avec une origine du fil conducteur (18) ;
chauffer le tube isolant (16) ;
fixer la partie d'extrémité du côté du câble externe (30) sur le film isolant (21) par rétraction thermique dans la direction radiale ; et
comprimer le corps de détection thermique (17) par l'extrémité du côté du corps de détection thermique (29) par allongement thermique dans la direction axiale.
